# EUROPEAN PATENT SPECIFICATION

(11) **EP 1 418 859 B1**
(45) Date of publication and mention of the grant of the patent: **25.02.2009**
(21) Application number: 01968089.1
(22) Date of filing: 23.08.2001
(51) Int. Cl.: A61C 15/00

(54) **MONOFILAMENT DENTAL TAPES WITH SOFT ABRASIVE COATINGS**
MONOFILE DENTALBÄNDER MIT WEICHEN ABRASIVEN BESCHICHTUNGEN
RUBANS DENTAIRES MONOFILAMENTAIRES DOTES DE REVETEMENTS ABRASIFS DOUX

(43) Date of publication of application: 19.05.2004
(73) Proprietor: Whitehill Oral Technologies, Inc., Stafford, Texas 77477 (US)
(72) Inventor: HILL, Ira D., New Jersey 07760 (US); BROWN, Dale G., Texas 77488 (US)
(74) Representative: Wakerley, Helen Rachael
(86) International application number: PCT/US2001/026354
(87) International publication number: WO 2003/020158

(56) References cited:
- WO-A-96/39117
- WO-A-98/06350
- US-A- 3 699 979
- US-A- 3 699 979
- US-A- 3 838 702
- US-A- 3 943 949
- US-A- 5 033 488
- US-A- 5 226 435
- US-A- 5 967 154
- US-A- 5 967 154
- US-A- 6 080 481
- US-A- 6 146 687

## Description

Monofilament interproximal devices are described and claimed in: US-A-Re35,439; US-A-3,800,812; US-A-4,974,615; US-A-5,760,117; US-A-5,433,226; US-A-5,479,952; US-A-5,503,842; US-A-5,755,243; US-A-5,845,652; US-A-5,884,639; US-A-5,918,609; US-A-5,962,572; US-A-5,998,431; US-A-6,003,525; US-A-6,083,208; US-A-6,148,830; US-A-6,161,555; and US-A-6,027,592. These dental tapes generally have serious shortcomings in gentleness, in delivering coatings during flossing and in being handled easily and conveniently during flossing

Polytetrafluoroethylene (PTFE) based interproximal devices are described in: US-A-5,209,251; US-A-5,033,488; US-A-5,518,012; US-A-5,911,228; US-A-5,220,932; US-A-4,776,358; US-A-5,718,251; US-A-5,848,600; US-A-5,787,758; and US-A-5,765,576. To date, no commercial versions of these tapes have been coated effectively and cannot be used to deliver active ingredients, interproximally and subgingivally during flossing. Handling during flossing is difficult. Most have to provide a consumer acceptable edge. Many are plagued with serious dimensional inconsistency problems, as well.

Several Patent Applications have been filed on monofilament dental tapes with coatings comprising from between about 20% by weight and about 120% by weight of the monofilament tape. These are described in copending US-A-60/227,433 and US-A-60/227,255, filed 23 August 2000 and US-A- 60/263,220, filed 22 January 2001.

US-A-5,967,154 discloses a dental hygiene filament for use as a dental floss or as bristles for a tooth brush having an abrasive, granular substance uniformly distributed on its surface. The granular material may be permanently fixed to the surface of the filament by means of an adhesive, or may be incorporated into the filament material prior to the formation of the filaments.

US-A-3,943,949 discloses a flavoured dental floss or dental tape comprising a plurality of individual filaments formed into a single thread, which is coated with a water-insoluble wax with spray dried flavour particles adhered to it.

The present invention is directed to coated monofilament tapes with improved abrasive properties having a precoating that permanently holds abrasives to the tape during flossing, while simultaneously releasing a second saliva soluble overcoating containing various cleaning, mouth conditioning and therapeutic substances.

The permanent abrasive coating is described as a "Soft Abrasive™" that is effective during flossing in gently physically disrupting and/or removing: supragingival plaque and tartar, plaque and tartar at the gingival margin, interproximal plaque and tartar, subgingival plaque (biofilm), and supragingival and interproximal stained pellicle, etc.

Accordingly, one embodiment of the present invention is monofilament dental tapes coated with a Soft Abrasive™ permanent abrasive coating and overcoated with a saliva soluble coating suitable for physically removing biofilms, tartar and stained pellicle from interproximal, subgingival and gingival margin areas of teeth.

Preferably, the Soft Abrasive™ used with these monofilament dental tapes comprises a permanent coating that contains a permanent adhesive selected from the group consisting of polyvinyl, alcohol-based, epoxy-based, solvent-based, radiant-cured, methacrylate-based, polyurethane-based, natural and other synthetic-based adhesives and combinations thereof. More preferably, the Soft Abrasive™ permanent coating contains an abrasive selected from the group consisting of tricresylphosphate, dicalcium phosphate, pumice, aluminum silicate, silica, glass beads, titanium oxide, rice flour, quartz, novaculite, silicon carbide, alumina zirconia, alumina, polishing alumina, calcined aluminum oxide, calcium oxide, silicon and zirconium oxide and combinations thereof.

A method for removing tartar, biofilms and stained pellicle thereby using a dental tape according to the invention is also described below. The method comprises flossing regularly (i.e., at least once daily) with a monofilament dental tape coated with a Soft Abrasive™ permanent coating and overcoated with a saliva soluble coating suitable for physically removing biofilms, tartar and stained pellicle from interproximal, subgingival and gingival margin areas of teeth.

A method for manufacturing monofilament dental tapes coated with a permanent Soft Abrasive™ and overcoated with a saliva soluble coating is also described below. The preferred manufacturing method comprises the steps of:
(a) precoating said tape with a permanent adhesive at from between about 1 % and about 30% by weight of said monofilament tape;
(b) adding an abrasive at from between about 0.25% and about 20% by weight of the monofilament tape;
(c) curing said adhesive/abrasive coating; and
(d) coating said treated tape with a saliva soluble coating at between about 33 mg/m and about 77 mg/m (between about 30 mg/yd and about 70 mg/yd).

In order to improve biofilm disruption and/or removal with coated monofilament dental tapes, it has been found that these tapes require more abrasive action than can be achieved with the various saliva soluble coatings containing various abrasives at various levels. Eventually, these saliva soluble coatings, with their high abrasive contents, are "worked" out of those interproximal, subgingival and gingival margin areas, where they have been delivered during flossing by saliva and crevicular fluid flow, in combination with the sawing action that takes place during flossing. All of the foregoing tend to dilute-out the abrasives released during flossing and to minimize their tartar, biofilm and stained pellicle physical disruption and/or removal capabilities.

Therefore, the monofilament dental tape of the present invention is suitable for use in a method for the improved removal of tartar, biofilm and stained pellicle, in which the method comprises the physical removal and/or disruption of these materials by cleaning with monofilament dental tapes having improved physical abrasive properties.

A preferred embodiment of the invention comprises the coated monofilament dental tapes described herein, which include the gentle permanent abrasive properties described.

For the purposes of the invention, various monofilament dental tapes including PTFE, elastomeric, homopolymer and bicomponent dental tapes are precoated with a permanent adhesive selected from a wide range of adhesives including polyvinyl alcohol based adhesives, polyurethane adhesives, epoxy adhesives, ultraviolet cured adhesives, polymethacrylate based adhesives, etc.

Various abrasives are added to the adhesive prior to the adhesive curing in a manner that allows at least a portion of the adhesive surface to be available for imparting abrasive action to the monofilament tape during flossing. The "sand paper" effect of these various adhesive/abrasive combinations produces a gentle "Soft Abrasive™" action when combined with the saliva soluble coating substances in the overcoating applied to the permanent adhesive coating for release from the tape during flossing.

Suitable adhesives for the permanent Soft Abrasive™ coatings on monofilament dental tapes of the present invention include:
polyvinyl alcohol (PVA) polymer based adhesives that can be fully hydrolyzed, partially hydrolyzed and copolymerized under the trademark Elvanol®, including Elvanol® Grades: 50-42, 51-05, 52-22, 70-06, 71-30, 75-15, 85-30, 85-82, 90-50, T-25 and T-25 LR,
solvent based adhesives,
radiant cured adhesives including UV light and electron beam (EB) cured adhesive,
epoxy based adhesives,
methacrylate based adhesive,
polyurethane based adhesives, and
other natural and synthetic adhesive substances that will adhere to those monofilament substrates as described in Tables 1 through 4 below.

The adhesives can comprise from between about 1% and about 30% by weight of the monofilament tape.

Suitable abrasives for use in the monofilament dental tapes of the present invention, which are designated by the trademark "Soft Abrasive™," include tricresylphosphate (TCP), dicalcium phosphate (DCP), pumice, aluminum silicate, silica, glass beads, titanium oxide, rice flour, quartz, novaculite, silicon carbide, alumina zirconia, alumina, polishing alumina, calcined aluminum oxide, calcium oxide, silicon and zirconium oxide; all of the foregoing at various crystal forms, particle shapes, including platy and hexagonal; various hardness including Rockwell 48-50c at various sieve analysis ranging from U.S. sieve #6 to #40; various specific gravity ranges including 2.65 gm/cc, 3.20 gm/cc, 4.3 gm/cc, 3.6 to 3.9 gm/cc.

These abrasives are added to adhesive precoated monofilament tape at between about 0.25% and about 20% by weight of the monofilament tape. A preferred method of adding the abrasive to the adhesive precoated tape is by means of a dusting process where the tape is passed through a chamber charged with abrasive particles in the air, wherein the abrasive particles coat the precured adhesive coated tape as it passes through the dusting chamber.

Some of these abrasives are commercially available from AGSCO Corp. Wheeling, Illinois.

Suitable monofilament tapes such as described in Tables 1 through 4 below can be precoated with Soft Abrasives™ including adhesive/abrasive combinations such as described above to produce Soft Abrasive™ tapes wherein the adhesive/ abrasive combination comprises from between about 1% and about 50% by weight of said monofilament tapes. These Soft Abrasive™ tapes are then overcoated with saliva soluble coatings such as described in Table 5 to produce Soft Abrasive™ coated monofilament tapes.

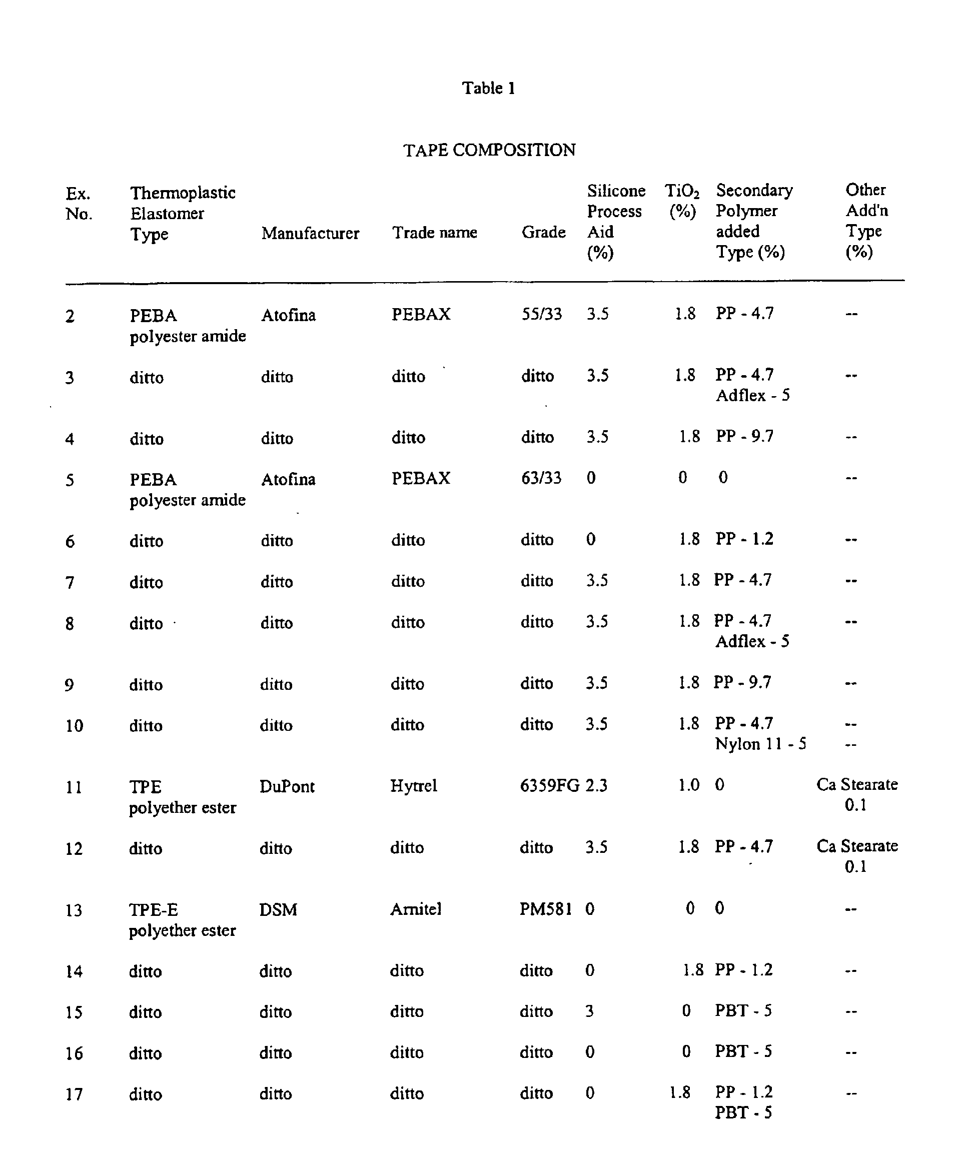

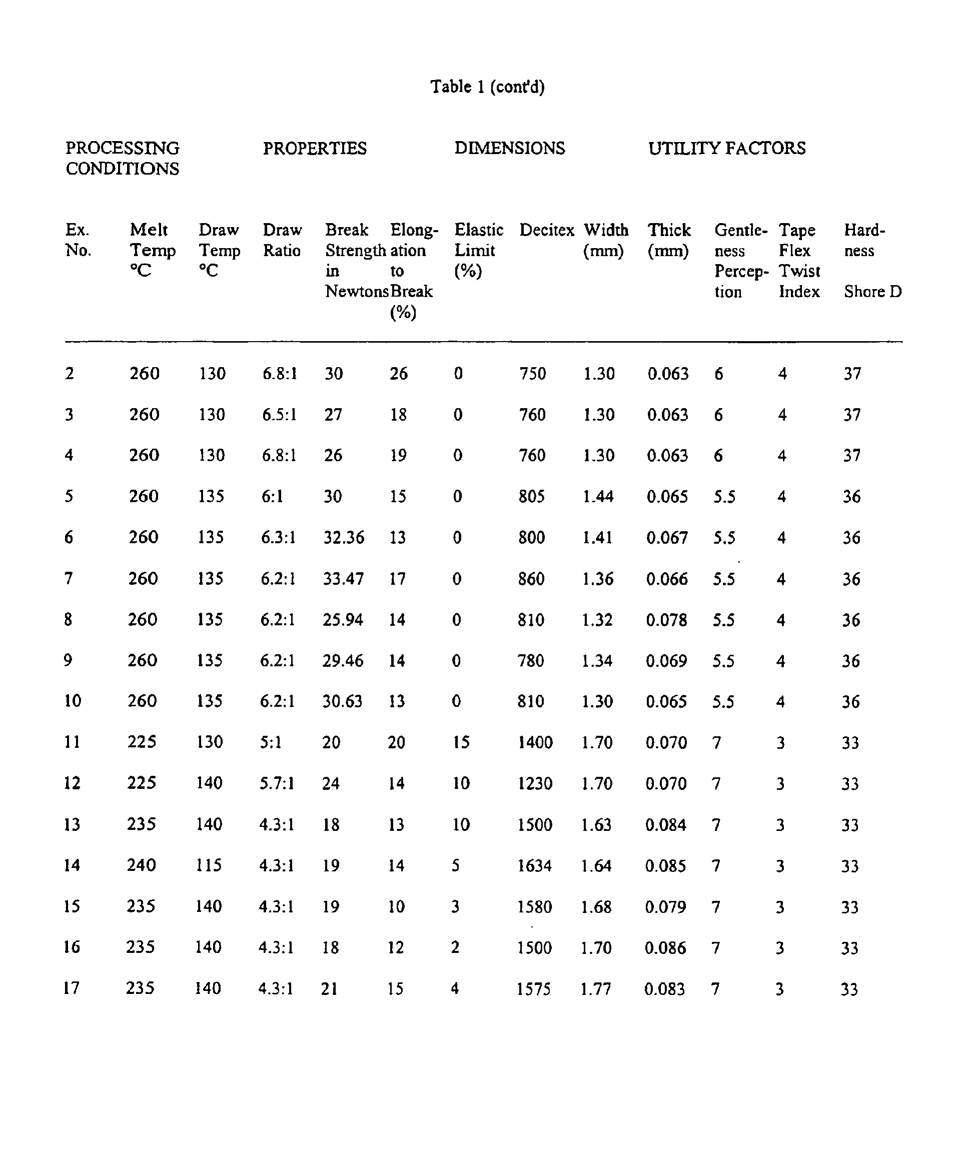

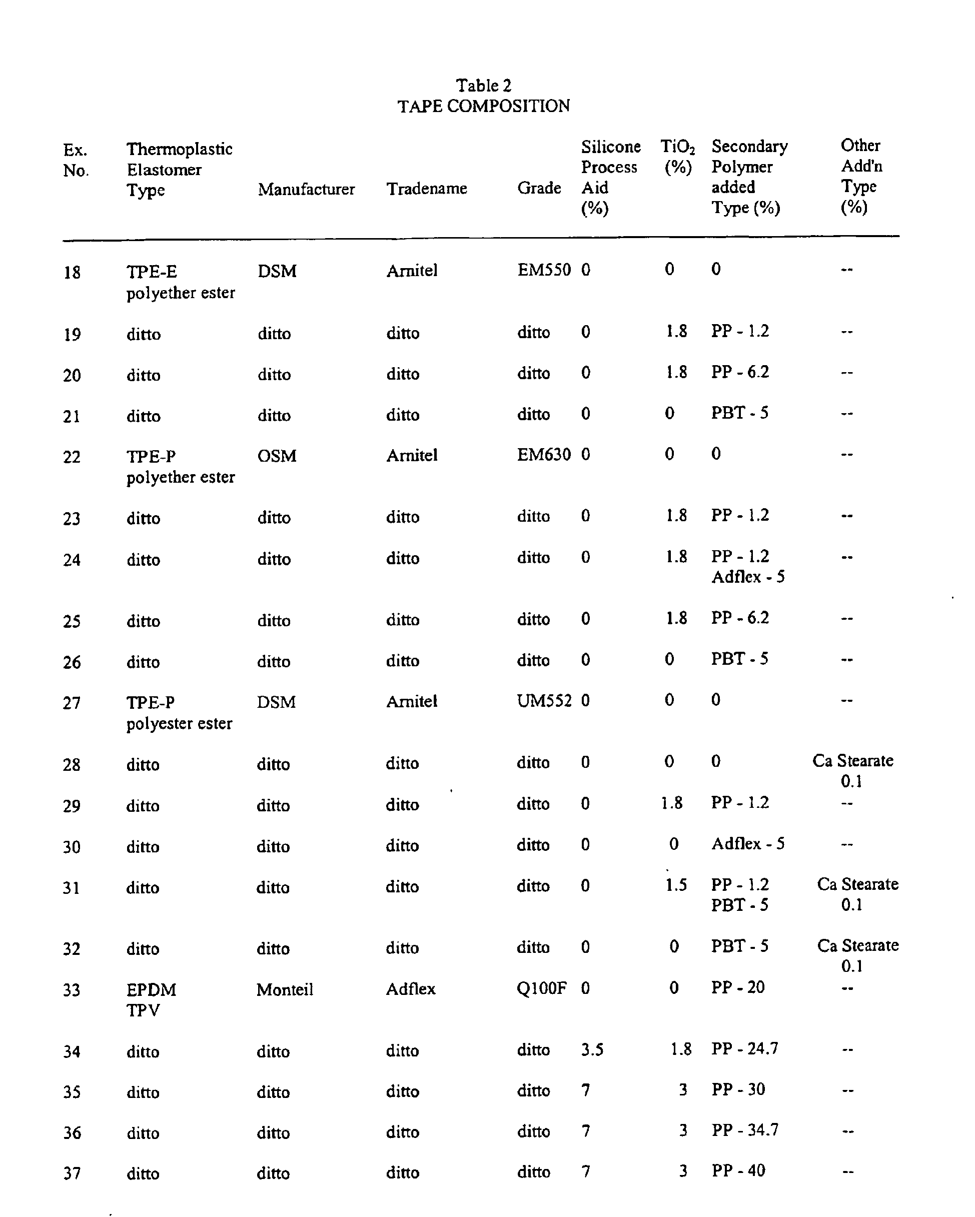

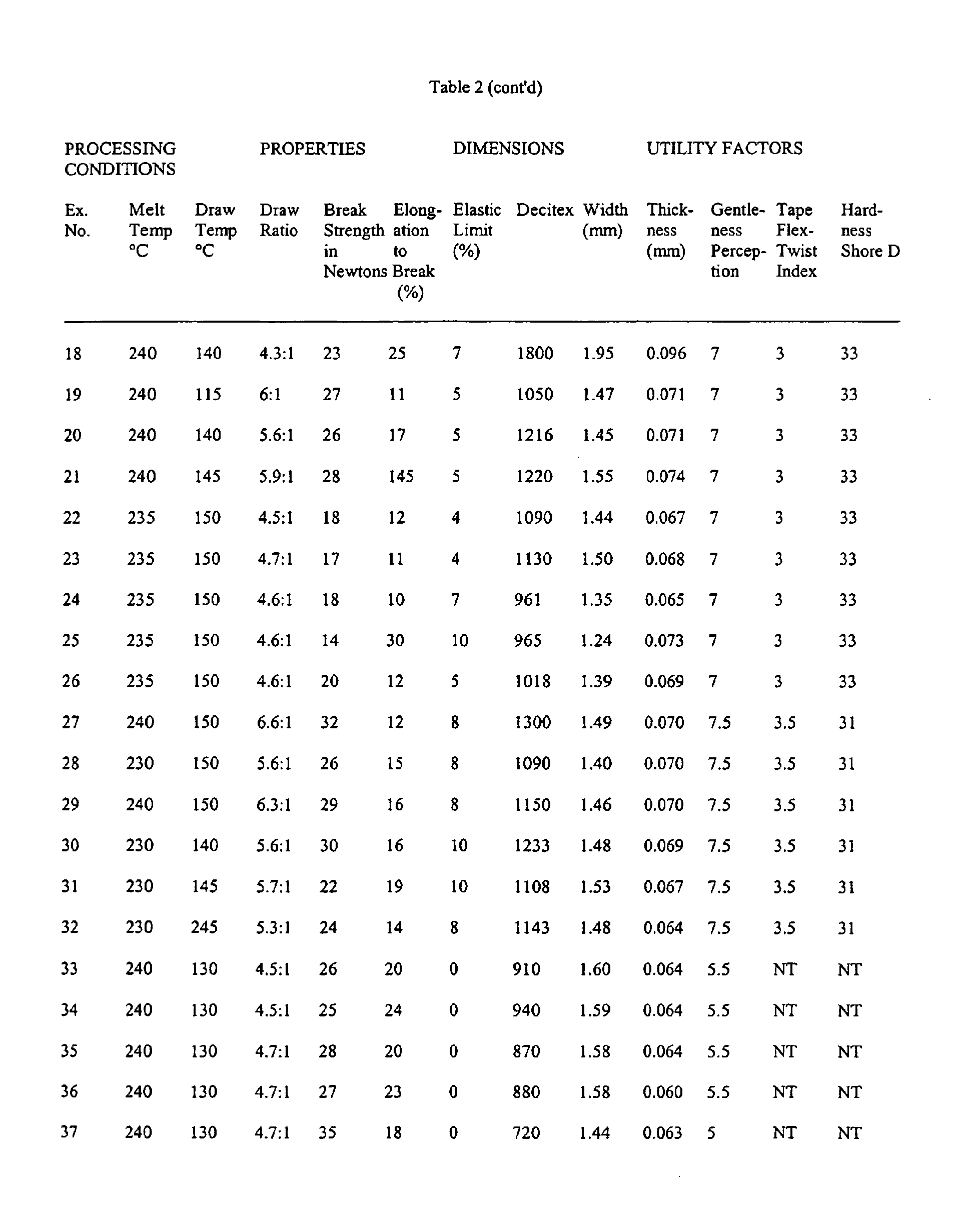

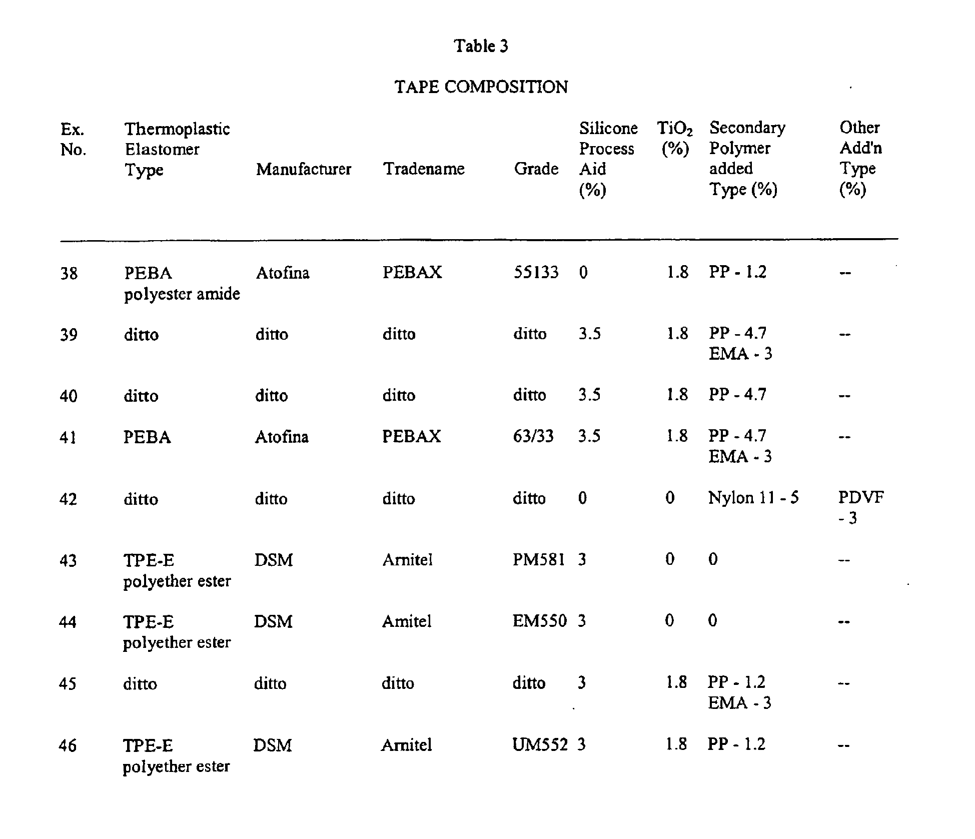

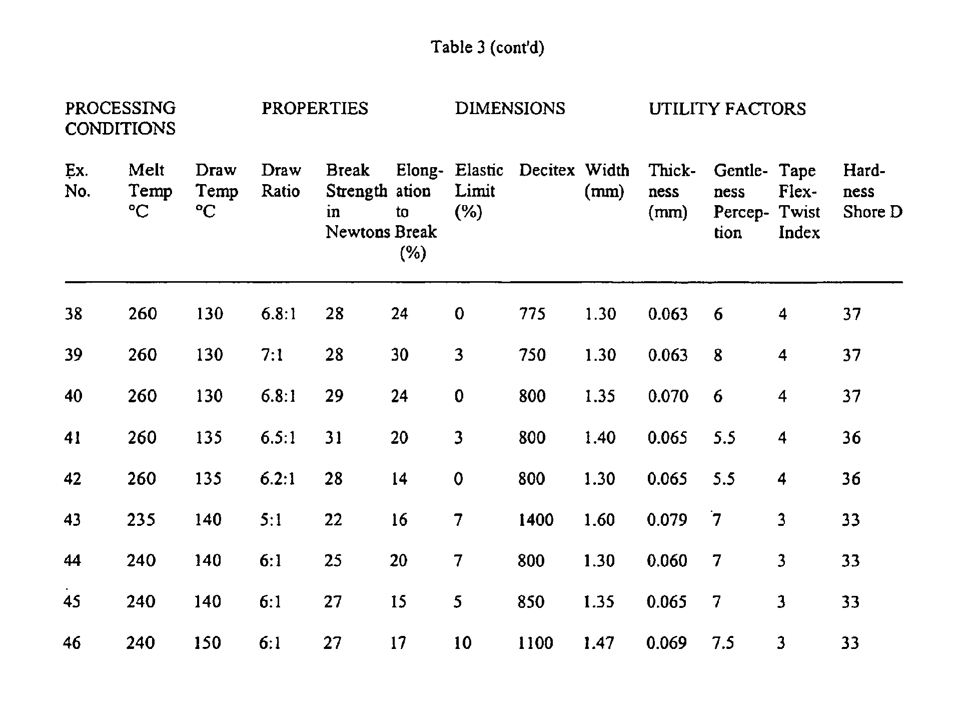

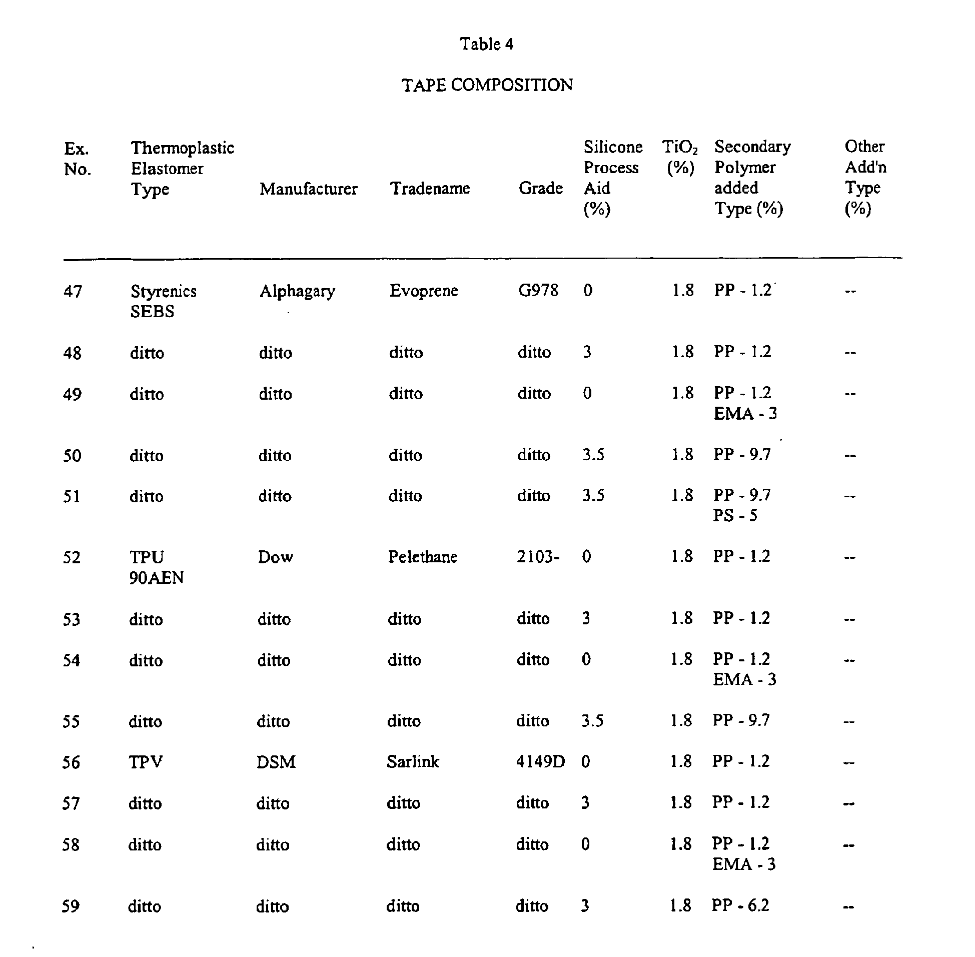

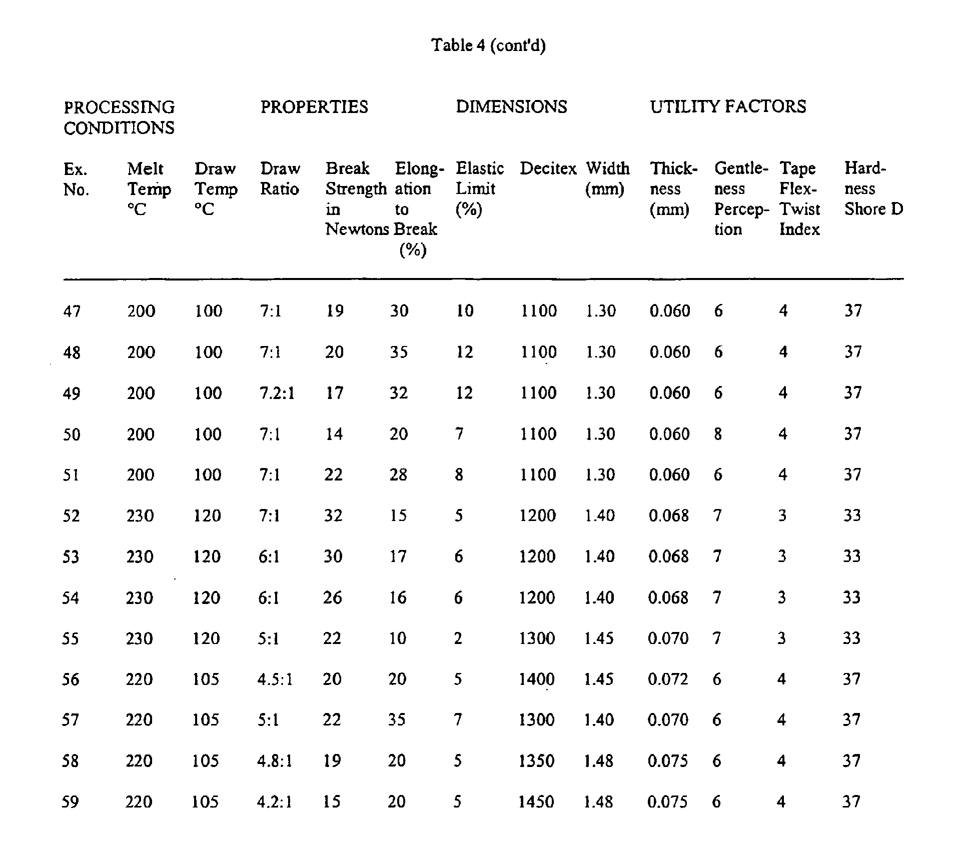

**Table 5**

| EXAMPLE | 60 | 61 | 62 | 63 | 64 | 65 | 66 | 67 | 68 | 69 | 70 | 71 | 72 | 73 | 74 | 75 | 76 | 77 |
|---|---|---|---|---|---|---|---|---|---|---|---|---|---|---|---|---|---|---|
| Ingredient | | | | | | | | | | | | | | | | | | |
| Ultramulsion 10-2.5* | 57.1 | 54.8 | 52.3 | 50.8 | 50.8 | 50.8 | 58.8 | 60.8 | | 60.1 | 55.1 | 51.1 | 60.1 | | 61.1 | 61.1 | 53.1 | 57.1 |
| POLOXAMER 407 | | | | | | | | | 60.1 | | | | | 60.1 | | | | |
| Emsorb 2726 | 12.5 | 7.5 | 12.5 | 9 | 5 | 3 | 3 | 0 | 3 | 3 | 3 | 3 | 3 | 3 | 4 | 3 | 3 | 3 |
| Stearyl Alcohol | 9.2 | 10.5 | 8 | 7 | 11 | 13 | 15 | 16 | 15 | 15 | 15 | 15 | 15 | 15 | 10 | 8 | 15 | 15 |
| Insoluble Saccharin | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| Propyl gallate | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Spicemint Flavor | 4 | 4 | 4 | 4 | 4 | 4 | 4 | 4 | 5 | 5 | 5 | 5 | 5 | 5 | 5 | 5 | 5 | 5 |
| Vanilla Mint Flavor | 4 | 4 | 4 | 4 | 4 | 4 | 4 | 4 | 5 | 5 | 5 | 5 | 5 | 5 | 5 | 5 | 5 | 5 |
| Tetrasodiumpyrophosphate | 8 | 14 | 14 | 10 | 10 | 10 | 10 | 10 | 10 | | 10 | 14 | 4 | | 6 | 6 | 10 | 6 |
| dicalcium phosphate | | | | | | | | | | 10 | | | 6 | 10 | | | | |
| Microcrystalline Wax ML 445 | | | | 10 | 10 | 10 | 0 | 0 | 0 | 0 | 5 | 5 | | 0 | 7 | 10 | 7 | 7 |
| Triclosan | 3.3 | 3.3 | 3.3 | 3.3 | 3.3 | 3.3 | 3.3 | 3.3 | | | | | | | | | | |
| Observation | | | | | | | | | | | | | | | | | | |
| Need heat to wind | y | | n | y | y | n | Y | Y | y | y | y | y | y | y | y | y | y | y |
| Bobbin tack (1=poor, 5=good) | 1 | | 5 | 5 | 3 | 4 | | 4 | 3 | 2 | 4 | 4 | 3 | 3 | 4 | 3 | 4 | 4 |
| Flake resistance | | | | | | | | | | | | | | | | | | |
| Feels sticky (1=no, 5 =very) | | | | 5 | 4 | 4 | 2 | 1 | 2 | 2 | 3 | 3 | 3 | 1 | 4 | 3 | 4 | 4 |
| Load of two samples | 29/19 | na | na | 43/50 | 28/11 | 53/39 | 58/43 | 33/20 | 51/40 | 33 | 46/53 | 40/39 | 38/38 | 50/37 | 48 | 45 | 38/39 | 43/39 |

### ADDDITIONAL EXAMPLES:

In the following example, the monofilament the tape was Fibaclean™ from the Perident Company with a thickness of 0.064 mm (0.0025 inches) and a width of 1.27 mm (0.050 inches). The heated rollers were set with a gap of 0.051 mm (0.002 inches) to 0.0051 mm (0.0002 inches), temperatures ranged from 110-150°C depending on the melt-emulsion viscosity requirements.

### Example 78:

A series of chemotherapeutic tapes were precoated with PVA adhesives of the Elvanol® series described above at between about 1 % and 5% by weight of the monofilament tape. A series of different adhesives were added to the adhesive coated tapes prior to curing of the adhesive on each tape. The abrasives were added to the precured adhesive by passing the precoated tape through an abrasive charged chamber where the abrasive particles are maintained in the air of the chamber by a supplemental air charging means. Various Soft Abrasive™ tapes for the purposes of the present invention with abrasives including pumice, aluminum silicate and silicon carbide present on the tape at from between about 0.5% by weight and about 5% by weight of the monofilament tape are prepared with an overcoating of a saliva soluble substance as described below.
Chlorhexidine Chemotherapeutic Monofilament Tape:

A saliva soluble overcoating was added to these abrasive containing tapes at about 52 g/m. This coating comprised:

| Melt-Emulsion Ingredients | % w/w | Load mg/m(mg/yd) | Final Thickness mm(inches) |
|---|---|---|---|
| Poloxamer F-127 | 56.52 | | |
| 2.5 MM cs PDMS⁽¹⁾ | 6.28 | | |
| PEG 1450 | 7.0 | | |
| Mic. Wax ML 445 | 22.4 | 58.5(53.2) | 0.127 (0.005) |
| Saccharin, insol | 1.8 | | |
| Flavor | 5.4 | | |
| chlorhexidine base | 0.6 | | |

| | | | |
|---|---|---|---|
| ⁽¹⁾ PDMS = polydimethylsiloxane at 2,500,00 cs viscosity combined with the Poloxamer F-127 in the form of an Ultramulsion as described in various Hill patents. | | | |

The various Soft Abrasive™ tapes produced as described above can be packaged in single dose packages for dispensing as an Rx product under prescription. Each of these single dose Soft Abrasive chlorhexidine tapes releases about 0.6% by weight CHX during flossing and simultaneously removes CHX-stained pellicle from previous treatments, thereby controlling the level of CHX-stained pellicle associated with this treatment. This reduced level of pellicle staining is a primary attribute of this CHX treatment that promotes compliance.

### Example 79:

### Prophy Flosses:

A series of monofilament dental tapes as described in Examples 2 through 59 are precoated with "prophy paste"-type abrasives including pumice, silica, DCP, alumina silicate, and silicon carbide, secured to the tape using a series of radiant curable adhesives. These various abrasive substances are maintained in an abrasive charged chamber through which the adhesive coated tape is passed. The tapes are radiant cured after addition of the adhesive. These "prophy" adhesives are present on the various tapes at from between about 0.25% and about 5% by weight of the monofilament tape. All the tapes are overcoated with one of the saliva soluble coatings as described in Examples 60 through 77.

The saliva soluble coatings are added to the adhesives containing tapes at between about 33 and about 77 mg/m (between about 30 and about 70 mg/yd).

The resultant tapes are used exclusively by oral care professionals and particularly oral hygienists in their prophylaxis procedures.

The present invention has been described in detail, including the preferred embodiments thereof. However, it will be appreciated that those skilled in the art, upon consideration of the present disclosure, may make modifications and/or improvements on this invention and still be within the scope of this invention as set forth in the following claims.

## Claims

1. Monofilament dental tapes coated with a permanent abrasive coating **characterised in that** the dental tape is overcoated with a saliva soluble coating suitable for physically removing biofilms, tartar and stained pellicle from interproximal, subgingival and gingival margin areas of teeth.

2. Monofilament dental tapes according to Claim 1, wherein said permanent abrasive coating contains a permanent adhesive selected from the group consisting of polyvinyl, alcohol-based, epoxy-based, solvent-based, radiant-cured, methacrylate-based, polyurethane-based, natural and other synthetic-based adhesives and combinations thereof.

3. Monofilament dental tapes according to Claim1, wherein said permanent abrasive coating contains an abrasive selected from the group consisting of tricresylphosphate, dicalcium phosphate, pumice, aluminum silicate, silica, glass beads, titanium oxide, rice flour, quartz, novaculite, silicon carbide, alumina zirconia, alumina, polishing alumina, calcined aluminum oxide, calcium oxide, silicon and zirconium oxide and combinations thereof.

4. A method for manufacturing monofilament dental tapes coated with a permanent abrasive coating and overcoated with a saliva soluble coating comprising:
(e) precoating said tape with a permanent adhesive at from between about 1 % and about 30% by weight of said monofilament tape;
(f) adding an abrasive at from between about 0.25% and about 20% by weight of the monofilament tape;
(g) curing said adhesive/abrasive coating; and
(h) coating said treated tape with a saliva soluble coating at from between about 33 mg/m and about 77 mg/m.

## Patentansprüche

1. Monofile Dentalbänder, die eine abrasive Dauerbeschichtung tragen, **dadurch gekennzeichnet, dass** das Dentalband mit einer speichellöslichen Beschichtung überzogen ist, die geeignet ist, Biofilme, Zahnstein und Pellikelflecken von interproximalen, subgingivalen und gingivalen Zahnrandbereichen zu entfernen.

2. Monofile Dentalbänder nach Anspruch 1, wobei die genannte abrasive Dauerbeschichtung einen Dauerklebstoff enthält, der ausgewählt ist aus der Gruppe bestehend aus Polyvinyl, alkoholgestützten, epoxidgestützten, lösungsmittelgestützten, strahlungshärtenden, methacrylatgestützten, polyurethangestützten, natürlichen und anderen synthetischen Klebstoffen und Kombinationen davon.

3. Monofile Dentalbänder nach Anspruch 1, wobei die genannte abrasive Dauerbeschichtung ein Abrasivmittel enthält, das ausgewählt ist aus der Gruppe bestehend aus Phosphorsäuretricresylester, Calciumhydrogenphosphat, Bimsstein, Aluminiumsilicat, Kieselerde, Glasperlen, Titanoxid, Reismehl, Quarz, Novaculit, Siliciumcarbid, Tonerde-Zirkoniumerde, Aluminiumoxid, Poliertonerde, calciniertes Aluminiumoxid, Calciumoxid, Silicium- und Zirconiumoxid und Kombinationen davon.

4. Verfahren zur Herstellung von monofilen Dentalbändern, die eine abrasive Dauerbeschichtung tragen und mit einer speichellöslichen Beschichtung überzogen sind, das die folgenden Schritte beinhaltet:
e) Vorbeschichten des genannten Bandes mit einem Dauerklebstoff mit zwischen etwa 1 und etwa 30 Gew.-% des genannten monofilen Bandes;
f) Zugeben eines Abrasivmittels mit zwischen etwa 0,25 und etwa 20 Gew.-% des monofilen Bandes;
g) Härten der genannten Klebstoff/Abrasivmittel-Beschichtung; und
h) Beschichten des genannten behandelten Bandes mit einer speichellöslichen Beschichtung mit zwischen etwa 33 mg/m und etwa 77 mg/m.

## Revendications

1. Rubans dentaires monofilamentaires dotés d'un revêtement abrasif permanent **caractérisés en ce que** le ruban dentaire est recouvert d'un revêtement soluble dans la salive convenant à l'élimination physique de biofilms, tartre et pellicule tâchée des zones marginales interproximales, sous-gingivales et gingivales des dents.

2. Rubans dentaires monofilamentaires selon la revendication 1, dans lesquels ledit revêtement abrasif permanent contient un adhésif permanent sélectionné dans le groupe consistant en adhésifs de polyvinyle, à base d'alcool, à base d'époxy, à base de solvant, durcis par exposition à un rayonnement, à base de méthacrylate, à base de polyuréthane, naturels et autres à base synthétique et des combinaisons de ceux-ci.

3. Rubans dentaires monofilamentaires selon la revendication 1, dans lesquels ledit revêtement abrasif permanent contient un abrasif permanent sélectionné dans le groupe consistant en phosphate de tricrésyle, phosphate dicalcique, poudre de ponce, silicate d'aluminium, silice, billes de verre, oxyde de titane, farine de riz, quartz, novaculite, carbure de silicium, zircone, oxyde d'aluminium, oxyde d'aluminium de polissage, oxyde d'aluminium calciné, oxyde de calcium, silicium et oxyde de zirconium et des combinaisons de ceux-ci.

4. Procédé de fabrication de rubans dentaires monofilamentaires revêtus d'un revêtement abrasif permanent et recouverts d'un revêtement soluble dans la salive comprenant :
(e) le pré-revêtement dudit ruban avec un adhésif permanent à raison d'environ 1 % à environ 30 % en poids dudit ruban monofilamentaire ;
(f) l'ajout d'un abrasif à raison d'environ 0,25 % à environ 20 % en poids du ruban monofilamentaire ;
(f) le durcissement dudit revêtement adhésif/abrasif ; et
(g) le revêtement dudit ruban traité avec un revêtement soluble dans la salive à raison d'environ 33 mg/m à environ 77 mg/m.
